# EUROPÄISCHE PATENTSCHRIFT

(11) **EP 3 476 516 B1**
(45) Veröffentlichungstag und Bekanntmachung des Hinweises auf die Patenterteilung: **23.03.2022**
(21) Anmeldenummer: 17198550.0
(22) Anmeldetag: 26.10.2017
(51) Int. Cl.: B23K 3/02, B23K 3/06, B23K 3/08, B23K 3/04, B23K 3/00

(54) **LÖTVORRICHTUNG**
SOLDERING DEVICE
DISPOSITIF DE SOUDAGE

(43) Veröffentlichungstag der Anmeldung: 01.05.2019
(73) Patentinhaber: Ersa GmbH, 97877 Wertheim (DE)
(72) Erfinder: ALLETZHÄUSSER, Thomas, 97877 Wertheim (DE); ALLETZHÄUSSER, Tim, 97877 Wertheim (DE)
(74) Vertreter: DREISS Patentanwälte PartG mbB

(56) Entgegenhaltungen:
- CA-A1- 2 762 296
- US-A- 4 935 600
- US-A1- 2015 246 404
- US-B1- 6 624 388

## Beschreibung

Die Erfindung betrifft ein Lötsystem, welches wenigstens zwei Lötvorrichtungen umfasst, sowie ein Verfahren zum Betreiben eines derartigen Lötsystems. Eine zugehörige Lötvorrichtung kann insbesondere sein eine Lötstation zum Handlöten oder zum robotergeführten Löten oder Entlöten, ein Reworksystem, ein Lötbad, eine Heizplatte oder eine Lötrauchabsaugvorrichtung, mit einer Steuereinrichtung, die einen zentralen Mikrocontroller und/oder Mikroprozessor umfasst und zur Steuerung wenigstens eines Betriebsparameters der Lötvorrichtung ausgebildet ist.

Solche Lötvorrichtungen sind aus dem Stand der Technik vielfach bekannt. Als Lötstationen werden üblicherweise Lötvorrichtungen zum Handlöten bezeichnet, welche einen Lötkolben, Entlötkolben oder Heißluftkolben aufweisen. Dabei ist es denkbar, dass der Lötkolben handgeführt oder robotergeführt ist.

Lötrauchabsaugvorrichtungen werden verwendet, um beim Löten oder Entlöten entstehende Dämpfe oder Lötrauch abzusaugen. Die Lötrauchabsaugvorrichtungen weisen dabei typischerweise einen Filter, sowie ein von einem drehzahlgeregelten Elektromotor angetriebenes Lüfterrad auf.

Als Heizplatte ausgebildete Lötvorrichtungen sind Geräte zum Erwärmen einer zu bearbeitenden Platine beim hand- oder robotergeführten Löten.

Unter Reworksystemen oder Reworkgeräten werden Lötvorrichtungen verstanden, welche im Rahmen der Prototypenfertigung und Elektronikreparatur verwendet werden. Derartige Reworksysteme weisen typischerweise mehrere motorisch oder manuell angetriebene Achsen auf. Darüber hinaus weisen die aus dem Stand der Technik bekannten Reworksysteme Heizeinrichtungen, insbesondere oberhalb und unterhalb eines Arbeitsraums angeordnete Heizeinrichtungen zum Beheizen des Arbeitsraums, an den Achsen angeordnete Greifeinrichtungen, sowie Kameras und Sensoren, wie bspw. Temperatursensoren, zur Prozessüberwachung auf.

Diese aus dem Stand der Technik bekannten Lötvorrichtungen werden oftmals gemeinsam verwendet. So ist es bspw. bekannt, in einem Reworksystem entstandene Dämpfe oder Lötrauch mit einer Lötrauchabsaugvorrichtung abzusaugen. Darüber hinaus ist es bekannt, eine Lötstation gemeinsam mit den eingangs genannten Heizplatten zu verwenden und beim Löten oder Entlöten entstandene Dämpfe oder Lötrauch ebenfalls mit einer Lötrauchabsaugvorrichtung abzusaugen. Die bekannten Lötvorrichtungen können teilweise miteinander kabelgebunden verbunden werden, so dass es möglich ist, eine Lötrauchabsaugvorrichtung oder eine Heizplatte lediglich dann zu betreiben, wenn auch die Lötstation zum Löten oder Entlöten betrieben wird oder wenn ein Reworksystem betrieben wird. Da die betreffenden Geräte dann nur betrieben werden wenn dies erforderlich ist, kann Energie eingespart werden.

Aus der US 2015/246404 A1 ist ein Lötsystem gemäß dem Oberbegriff von Anspruch 1 mit einer Lötvorrichtung bekannt, die unter anderem eine Steuereinrichtung aufweist, welche über eine Funkverbindung mit einer Stromversorgungseinheit eines Lötgeräts kommuniziert.

Es hat sich jedoch bei den aus dem Stand der Technik bekannten Lötvorrichtungen gezeigt, dass eine kabelgebundene Verbindung der verschiedenen Lötvorrichtungen einerseits zu einem sehr hohen Verdrahtungsaufwand an den jeweiligen Arbeitsplätzen führt und dass die Lötvorrichtungen aufgrund der kabelgebundenen Verbindung vergleichsweise unflexibel einsetzbar sind.

Der Erfindung liegt daher die Aufgabe zugrunde, ein Lötsystem der eingangs genannten Art derart weiterzubilden, dass die einzelnen Lötvorrichtungen insgesamt flexibel einsetzbar ist. Zudem soll die Lötvorrichtung einfach und kostengünstig herstellbar sein.

Die eingangs genannte Aufgabe wird auch durch ein Lötsystem mit den Merkmalen des Anspruchs 1 gelöst.

Durch die Erfindung wird also die Flexibilität dahingehend entscheidend erweitert, dass Benutzer die einzelnen Lötvorrichtungen miteinander verbinden kann, insbesondere über eine Cloud, einen Server und/oder an eine Datenbanken anbinden kann, und dass dann die Daten vor Ort in Echtzeit einfach auf verschiedensten Geräten (Handy, Tablet) visualisiert werden können.

Dabei ist vorgesehen, dass die erste Lötvorrichtung zur drahtlosen Steuerung der wenigstens einen zweiten Lötvorrichtung ausgebildet ist und/oder dass die erste Lötvorrichtung zur drahtlosen Weitergabe oder zum drahtlosen Empfang von Daten von dem elektronischen Gerät ausgebildet ist. Vorteilhafterweise können dann bspw. Betriebs- und/oder Prozessparameter der ersten und/oder zweiten Lötvorrichtung an einen Bediener auf einem Bildschirm beispielsweise eines Smartphones ausgegeben werden. Es ist auch denkbar, dass durch drahtlosen Empfang von Daten ein Update der Lötvorrichtung durchgeführt werden kann. Darüber hinaus kann eine dynamische Prozesskontrolle ermöglicht werden, die sich gegebenenfalls nicht nur über den Arbeitsraum einer einzelnen Person oder einer einzelnen Lötvorrichtung erstreckt, sondern auf eine ganze Produktionslinie oder -halle ausgeweitet werden kann.

Eine Lötvorrichtung eines solchen Systems zeichnet sich dadurch aus, dass ein Funkmodul vorgesehen ist, welches ein Kommunikationsmodul umfasst, das zum Aufbau einer drahtlosen Datenverbindung ausgebildet ist. Vorteilhafterweise ist das Kommunikationsmodul zum Senden und zum Empfangen von Funkdaten ausgebildet.

Dabei ist es denkbar, dass das Kommunikationsmodul zum Senden und Empfangen von Funkdaten in verschiedenen Frequenzbändern ausgebildet ist, bspw. im 433 MHz Band, im 868 MHz Band, im 2,4 GHz Band oder im 5 GHz Band. Darüber hinaus ist es möglich, dass das Kommunikationsmodul zum Senden und Empfangen von Funkdaten mittels verschiedener Kommunikationsprotokolle ausgebildet ist. Es ist bspw. denkbar, dass das Kommunikationsmodul zum Senden und Empfangen nach dem Bluetooth-, XBee-, Zigbee-, WiFi- oder LoRa-Protokoll ausgebildet ist. Dabei können Funkdaten in verschiedenen Betriebsmodi ausgetauscht werden, bspw. peer-to-peer, point-to-point, oder auch point-to-multipoint.

Die Steuereinrichtung ist auch zum Regeln von Betriebsparametern der Lötvorrichtung ausgebildet. Als besonders bevorzugt hat es sich erwiesen, wenn die Steuereinrichtung auch zum Messen von Betriebs-und Prozessparametern ausgebildet ist. Es ist auch denkbar, dass die Steuereinrichtung bspw. zur Überwachung von Standzeiten ausgebildet ist. Die gemessenen und/oder überwachten Daten können vorteilhafterweise auch auf einem Anzeigemedium angezeigt werden. Somit kann bspw. die Standzeit einer an einem Lötkolben angeordneten Lötspitze überwacht und angezeigt werden. Es ist auch denkbar, dass die Steuereinrichtung die Standzeit eines Filters einer Lötrauchabsaugvorrichtung überwacht oder einen Verschmutzungsgrad des Filters der Lötrauchabsaugvorrichtung bspw. basierend auf dem Motorstrom des Elektromotors bestimmt, welcher ein Lüfterrad der Lötrauchabsaugvorrichtung antreibt.

Derartige Lötvorrichtungen haben sich als besonders vorteilhaft erwiesen, da insbesondere bei Lötsystemen, welche mehrere Lötvorrichtungen umfassen, eine hochflexible Kommunikation der einzelnen Lötvorrichtungen miteinander auf einfache Art und Weise ermöglicht werden kann. Es ist bspw. möglich, dass eine Drehzahl eines ein Lüfterrad einer Lötrauchabsaugvorrichtung antreibenden Elektromotors abhängig von dem jeweiligen Lötprogramm einer anderen Lötstation oder abhängig von der jeweiligen Löttemperatur geregelt wird. Darüber hinaus ist es bspw. auch denkbar, dass ein das Lüfterrad antreibender Elektromotor abhängig vom Betrieb der einen oder anderen Lötstation ein- oder ausgeschaltet wird.

Gemäß einer ersten vorteilhaften Weiterbildung der Lötvorrichtung ist vorgesehen, dass das Funkmodul den zentralen Mikrocontroller und/oder Mikroprozessor umfasst. Somit kann die für die Steuereinrichtung benötigte Rechenleistung vom Mikrocontroller und/oder Mikroprozessor des Funkmoduls bereitgestellt werden. Ein zusätzlicher Mikrocontroller und/oder Mikroprozessor wird dabei nicht zwingend benötigt.

Alternativ dazu ist jedoch auch denkbar, dass das Funkmodul einen zusätzlichen Mikrocontroller und/oder Mikroprozessor umfasst, der vom zentralen Mikrocontroller und/oder Mikroprozessor verschieden ist. Dabei ist es folglich möglich, dass zentrale Rechenaufgaben der Steuereinrichtung vom zentralen Mikrocontroller und/oder Mikroprozessor übernommen werden, wobei der zusätzliche Mikrocontroller und/oder Mikroprozessor lediglich für die Kommunikation mit dem zentralen Mikrocontroller und/oder Mikroprozessor verwendet wird.

Vorteilhafterweise ist eine Datenleitung, insbesondere eine BUS-Verbindung, vorgesehen, welche derart ausgebildet ist, dass sie den zentralen Mikrocontroller und/oder Mikroprozessor mit dem Kommunikationsmodul verbindet. Dabei ist es denkbar, dass die BUS-Datenleitung ein RxD-TxD-Datenleitung, ein I²C-Bus, ein SPI-Bus, ein LIN-Bus, ein CAN-Bus oder ein USB-Bus ist. Es ist jedoch auch jegliche andere Art einer BUS-Datenleitung möglich.

Wenn ein zusätzlicher Mikrocontroller und/oder Mikroprozessor vorgesehen ist, hat es sich als besonders vorteilhaft erwiesen, wenn die Datenleitung derart ausgebildet ist, dass sie den zentralen Mikrocontroller und/oder Mikroprozessor mit dem Kommunikationsmodul mittelbar über den zusätzlichen Mikrocontroller und/oder Mikroprozessor verbindet.

Eine weitere vorteilhafte Ausgestaltung sieht vor, dass die jeweilige Lötvorrichtung ein Gehäuse umfasst und das Funkmodul im Gehäuse angeordnet ist. Durch Anordnen des Funkmoduls innerhalb des Gehäuses kann eine drahtlose Datenverbindung ermöglicht werden, wobei Gehäusedurchbrüche für den Anschluss der Datenleitung an das Funkmodul vermieden werden können. Darüber hinaus kann ein zusätzlicher interner Verkabelungsaufwand zu einer außerhalb des Gehäuses angeordneten Buchse der Datenleitung vermieden werden. Somit kann insgesamt eine besonders kostengünstige Lötvorrichtung bereitgestellt werden, wobei die Lötvorrichtung aufgrund einer verringerten Anzahl an Gehäusedurchbrüchen zugleich widerstandsfähiger gegen äußere Einflüsse wie bspw. Schmutz oder Flüssigkeiten ist.

Alternativ dazu ist es jedoch auch möglich, dass die Lötvorrichtung ein Gehäuse umfasst, an dem eine Buchse der Datenleitung angeordnet ist, wobei das Funkmodul außerhalb des Gehäuses angeordnet ist und einen Stecker der Datenleitung umfasst. Somit kann ein Funkmodul bspw. an eine am Gehäuse angeordnete USB-Buchse einer USB-Datenleitung einer Lötvorrichtung angeschlossen werden.

Vorteilhafterweise umfasst die Steuereinrichtung eine Speichereinrichtung, die zum Speichern von Lötprogrammen und/oder Lötparametern ausgebildet ist.

Dabei ist es denkbar, dass das elektronische Gerät ein Smartphone, ein Tablet-Computer, ein Laptop-Computer, ein PC, eine Datenbrille oder ein Server ist. Es ist auch denkbar, dass die drahtlose Datenverbindung mittelbar über einen Server aufgebaut wird. Wenn der Server an das Internet angeschlossen ist, ist es bspw. möglich, dass herstellerseitig eine Fernwartung und/oder Ferndiagnose an der Lötvorrichtung durchgeführt werden kann.

Es ist auch denkbar, dass durch das elektronische Gerät ein spezifisches Lötprogramm erstellt wird, das den Bediener dazu anleitet entsprechende Lötstellen mit den dazu vorgesehenen Bauteilen zu löten und die Lötparameter oder Lötwerkzeuge den Anforderungen nach zu ändern oder zu wechseln, wodurch eine Art Rüstmanagement geschaffen wird. Eine Datenbrille kann beispielsweise die zu lötende Platine erkennen und die Instruktionen, den Platz des Bauteils auf der Platine, sowie die dessen physische und elektrische Beschaffenheit direkt in die Sicht des Nutzers einblenden.

Gemäß einer weiteren vorteilhaften Ausgestaltung des Lötsystems ist ein Scanner vorgesehen, welcher zum Lesen eines optischen Codes ausgebildet ist und mit der Steuereinrichtung der ersten Lötvorrichtung verbunden ist. Dabei ist es denkbar, dass der Scanner zum Lesen eines eindimensionalen Codes (1D-Code), wie bspw. eines Barcodes ausgebildet ist. Es ist jedoch auch möglich, dass der Scanner zum Lesen eines zweidimensionalen Codes (2D-Code), wie bspw. eines Datamatrix-Codes oder QR-Codes ausgebildet ist.

Ein derartiger optischer Code kann bspw. auf einer zu bearbeitenden Leiterplatte angebracht sein. Dabei ist es denkbar, dass die Steuereinrichtung der ersten Lötvorrichtung basierend auf dem vom Scanner gelesenen Code Betriebsparameter der ersten und/oder der zweiten Lötvorrichtung abspeichert. Somit kann bspw. eine bauteilspezifische Dokumentation der Betriebs- und Prozessparameter erfolgen, wobei beim Auftreten fehlerhafter Bauteile (bspw. kalte Lötstellen) die bei der Bearbeitung des jeweiligen fehlerhaften Bauteils abgespeicherten Betriebs- und Prozessparameter überprüft werden können. Bei systematisch falschen Betriebs- und Prozessparametern können somit ganze Bauteilchargen nachträglich identifiziert und auf Fehler überprüft werden.

Es ist auch möglich, dass die Steuereinrichtung der ersten Lötvorrichtung ein Lötprofil, Lötparameter und/oder ein Lötprogramm, welches in der Speichereinrichtung der ersten Lötvorrichtung abgespeichert ist, basierend auf einem mittels des Scanners eingelesenen Codes auswählt und an einem Display der ersten Lötvorrichtung und/oder an einem Display des elektronischen Geräts anzeigt.

Die eingangs genannte Aufgabe wird ferner durch ein Verfahren mit den Merkmalen des Anspruchs 11 gelöst. Dabei ist vorgesehen, dass die Steuereinrichtung der ersten Lötvorrichtung wenigstens einen Betriebsparameter der zweiten Lötvorrichtung drahtlos steuert. Somit ist es bspw. denkbar, dass die Steuereinrichtung einer Lötstation eine Drehzahl eines ein Lüfterrad einer Lötrauchabsaugvorrichtung antreibenden Elektromotors steuert.

Besonders bevorzugt ist es dabei, wenn die Steuerung des Betriebsparameters der zweiten Lötvorrichtung abhängig von einem Betriebsparameter der ersten Lötvorrichtung erfolgt. Somit kann bspw. die Drehzahl des Elektromotors, welcher das Lüfterrad antreibt, abhängig von der an der Lötstation eingestellten Löttemperatur einer Lötspitze gesteuert werden.

Es ist ferner auch möglich, dass die Steuerung des Betriebsparameters der zweiten Lötvorrichtung abhängig von einem gemessenen Prozessparameter der ersten Lötvorrichtung erfolgt. Somit kann bspw. die Drehzahl des Elektromotors, welcher das Lüfterrad antreibt, abhängig von der an einer Lötspitze eines Lötkolbens gemessenen Temperatur gesteuert werden.

Weitere Einzelheiten und vorteilhafte Weiterbildungen sind der nachfolgenden Beschreibung zu entnehmen, anhand derer verschiedene Ausführungsformen der Erfindung näher beschrieben und erläutert sind.

Es zeigen:
- Figur 1: eine schematische Darstellung einer ersten Ausführungsform eines erfindungsgemäßen Lötsystems;
- Figur 2: eine schematische Darstellung einer zweiten Ausführungsform eines erfindungsgemäßen Lötsystems;
- Figur 3: eine schematische Darstellung einer dritten Ausführungsform eines erfindungsgemäßen Lötsystems;
- Figur 4: eine schematische Darstellung einer vierten Ausführungsform eines erfindungsgemäßen Lötsystems;
- Figur 5: eine schematische Darstellung einer fünften Ausführungsform eines erfindungsgemäßen Lötsystems;
- Figur 6: eine schematische Darstellung einer sechsten Ausführungsform eines erfindungsgemäßen Lötsystems;
- Figur 7: eine schematische Darstellung einer siebten Ausführungsform eines erfindungsgemäßen Lötsystems; und
- Figur 8: eine schematische Darstellung einer achten Ausführungsform eines erfindungsgemäßen Lötsystems;

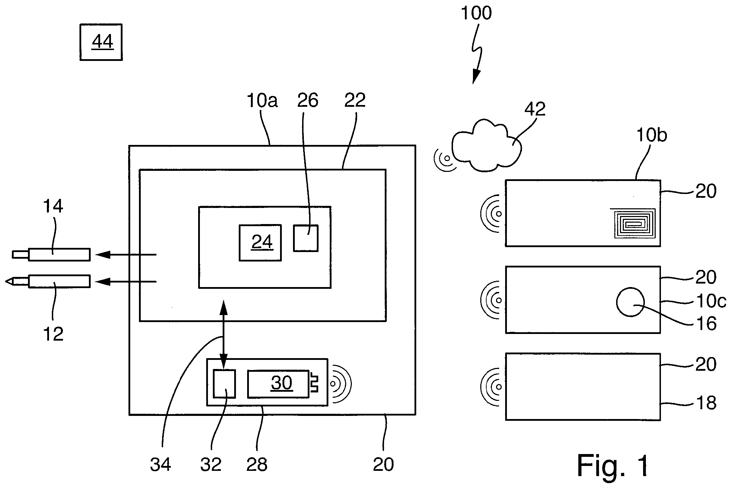

In den Figuren 1 bis 8 sind jeweils verschiedene Ausführungsformen eines erfindungsgemäßen Lötsystems 100 gezeigt. Sich in den Figuren entsprechende Elemente sind mit den sich entsprechenden Bezugszeichen gekennzeichnet.

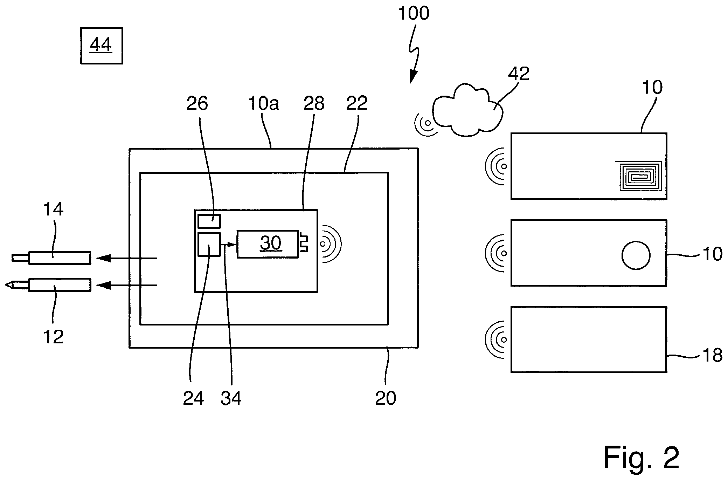

In den Figuren 1 und 2 ist jeweils ein Lötsystem 100 gezeigt, welches mehrere Lötvorrichtungen 10 umfasst.

Das Lötsystem 100 weist dabei eine erste Lötvorrichtung 10a auf, welche als Lötstation ausgebildet ist und welche einen handgeführten oder robotergeführten Lötkolben 12 und/oder einen handgeführten oder robotergeführten Heißluftkolben 14 umfasst. Das Lötsystem 100 umfasst ferner eine zweite Lötvorrichtung 10b, welche als Heizplatte ausgebildet ist und zum Erwärmen einer zu bearbeitenden Platine ausgebildet ist. Darüber hinaus weist das Lötsystem 100 eine dritte Lötvorrichtung 10c auf, welche als Lötrauchabsaugvorrichtung ausgebildet ist und zum Absaugen von beim Löten oder Entlöten entstehenden Dämpfen oder Lötrauch ausgebildet ist.

Die Lötrauchabsaugvorrichtung 10c weist einen in den Figuren nicht gezeigten Filter, sowie ein in den Figuren nicht gezeigtes Lüfterrad auf, welches von einem drehzahlgeregelten Elektromotor 16 angetrieben wird. Das in den Figuren 1 und 2 gezeigte Lötsystem weist ferner ein elektronisches Gerät 18 auf, welches ein Ausgabegerät zur visuellen Ausgabe von Informationen umfasst. Das elektronische Gerät 18 kann bspw. ein Smartphone, ein Tablet-Computer, ein Laptop-Computer, ein PC, eine Datenbrille oder ein Server sein.

Wie in den Figuren 1 und 2 deutlich zu erkennen ist, weisen die Lötvorrichtungen 10a, 10b und 10c jeweils ein Gehäuse 20 auf. Die Lötvorrichtungen 10a, 10b und 10c weisen zudem jeweils eine in dem Gehäuse 20 angeordnete Steuereinrichtung 22 auf.

Die Steuereinrichtungen 22 weisen einen zentralen Mikroprozessor 24, sowie eine Speichereinrichtung 26 auf. Die Speichereinrichtung 26 der in Figur 1 und 2 gezeigten, als Lötstation ausgebildeten ersten Lötvorrichtung 10a ist bspw. zum Speichern von Lötprogrammen und/oder Lötparametern ausgebildet.

Die Steuereinrichtung 22 ist zur Steuerung wenigstens eines Betriebsparameters der Lötvorrichtungen 10a, 10b und 10c ausgebildet. Die Steuereinrichtung 22 kann auch zum Regeln von Betriebsparametern der Lötvorrichtung 10a, 10b und 10c ausgebildet sein. Es ist auch denkbar, dass die Steuereinrichtung 22 zum Messen von Betriebs-und Prozessparametern ausgebildet ist. Bspw. kann die Steuereinrichtung 22 zur Überwachung von Standzeiten eines an die Lötvorrichtungen 10a, 10b oder 10c angeschlossenen Werkzeugs ausgebildet sein. Somit kann bspw. die Standzeit einer an einem Lötkolben 12 angeordneten Lötspitze überwacht werden. Es ist auch denkbar, dass die Steuereinrichtung 22 die Standzeit eines Filters einer Lötrauchabsaugvorrichtung 10c überwacht oder einen Verschmutzungsgrad des Filters der Lötrauchabsaugvorrichtung bspw. basierend auf dem Motorstrom des ein Lüfterrad der Lötrauchabsaugvorrichtung 10c antreibenden Elektromotors 16 bestimmt.

Die Lötvorrichtungen 10a, 10b und 10c weisen jeweils ein Funkmodul 28 auf, welches wiederum ein Kommunikationsmodul 30 umfasst, welches zum Aufbau einer drahtlosen Datenverbindung ausgebildet ist. Bei der in Figur 2 gezeigten ersten Lötvorrichtung 10a umfasst das Funkmodul 28 den zentralen Mikroprozessor 24, wobei das Funkmodul 28 bei der in Figur 1 gezeigten Lötvorrichtung 10a einen zusätzlichen Mikroprozessor 32 umfasst, welcher vom zentralen Mikroprozessor 24 verschieden ist. Bei der in Figur 2 gezeigten ersten Lötvorrichtung 10a werden folglich zentrale Rechenaufgaben der Steuereinrichtung 22 vom zentralen Mikroprozessor 24 des Funkmoduls 28 übernommen.

Das Kommunikationsmodul 30 ist mittels einer Datenleitung 34 mit dem zentralen Mikroprozessor 24 verbunden. Die Datenleitung 34 kann insbesondere eine BUS-Datenleitung sein. Dabei ist es denkbar, dass die Datenleitung 34 ein RxD-TxD-Verbindung, ein I²C-Bus, ein SPI-Bus, ein LIN-Bus, ein CAN-Bus oder ein USB- Verbindung ist. Es ist jedoch auch jegliche andere Art einer BUS-Datenleitung möglich. Darüber hinaus ist es bspw. denkbar, dass das Kommunikationsmodul 30 zum Senden und Empfangen von Funkdaten in verschiedenen Frequenzbändern ausgebildet ist, bspw. im 433 MHz Band, im 868 MHz Band, im 2,4 GHz Band oder im 5 GHz Band. Darüber hinaus ist es möglich, dass das Kommunikationsmodul 30 zum Senden und Empfangen von Funkdaten mittels verschiedener Kommunikationsprotokolle ausgebildet ist. Es ist bspw. denkbar, dass das Kommunikationsmodul zum Senden und Empfangen nach dem Bluetooth-, XBee-, Zigbee-, WiFi- oder LoRa-Protokoll ausgebildet ist. Dabei können Funkdaten in verschiedenen Betriebsmodi ausgetauscht werden, bspw. peer-to-peer, point-to-point, oder auch point-to-multipoint.

Bei den in Figur 1 gezeigten Lötvorrichtungen 10a, 10b und 10c verbindet die Datenleitung 34 den zentralen Mikroprozessor 24 mittelbar mit dem Kommunikationsmodul 30 über den zusätzlichen Mikroprozessor 32. Das Funkmodul 28 ist im Gehäuse 20 der Lötvorrichtungen 10a, 10b, 10c angeordnet, so dass Gehäusedurchbrüche für den Anschluss der Datenleitung 34 an das Funkmodul 28 vermieden werden können. Darüber hinaus kann ein zusätzlicher interner Verkabelungsaufwand zu einer außerhalb des Gehäuses 20 angeordneten Buchse der Datenleitung 28 vermieden werden. Dadurch können äußere Einflüsse aufgrund von Verschmutzungen, sowie Kosten für interne Verkabelung reduziert werden.

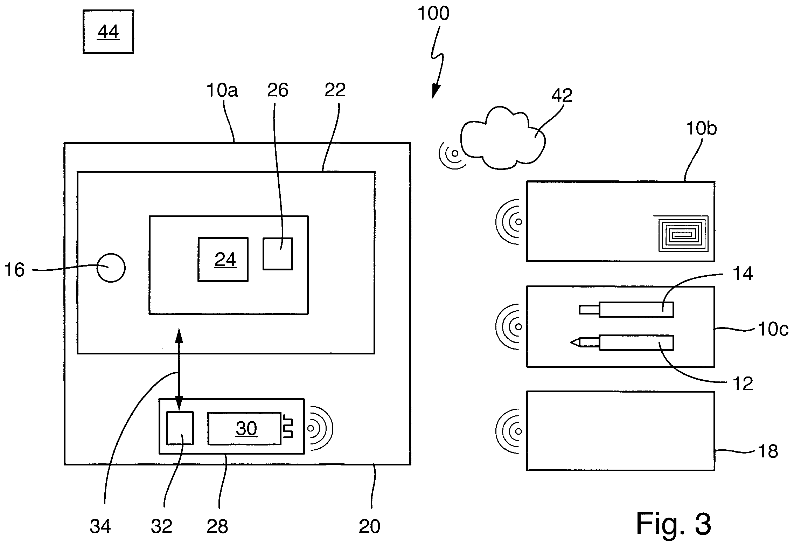

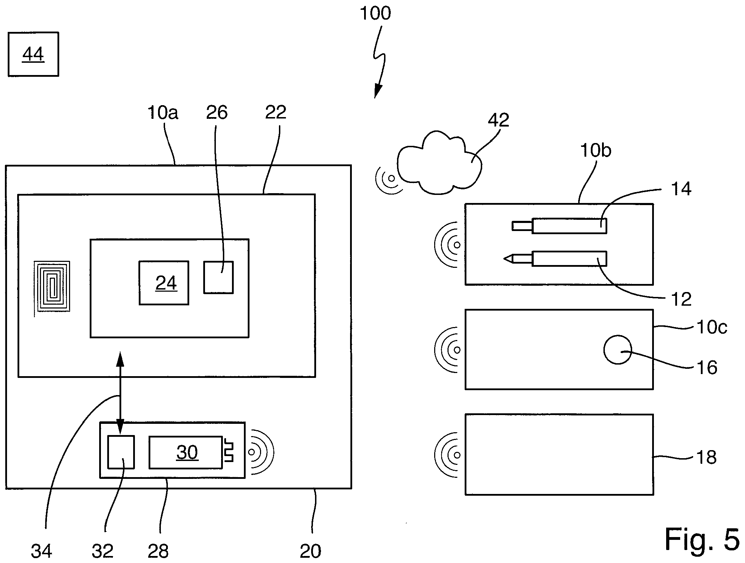

Die in den Figuren 3 und 5 gezeigten Lötsysteme 100 entsprechen im Wesentlichen dem in Figur 1 gezeigten Lötsystem 100. Als einziger Unterschied ist bei dem in Figur 3 gezeigten Lötsystem 100 die erste Lötvorrichtung 10a eine Lötrauchabsaugvorrichtung, die zweite Lötvorrichtung 10b eine Heizplatte und die dritte Lötvorrichtung 10c eine Lötstation. Bei dem in Figur 5 gezeigten Lötsystem 100 ist die erste Lötvorrichtung 10a eine Heizplatte, die zweite Lötvorrichtung 10b eine Lötstation und die dritte Lötvorrichtung 10c eine Lötrauchabsaugvorrichtung.

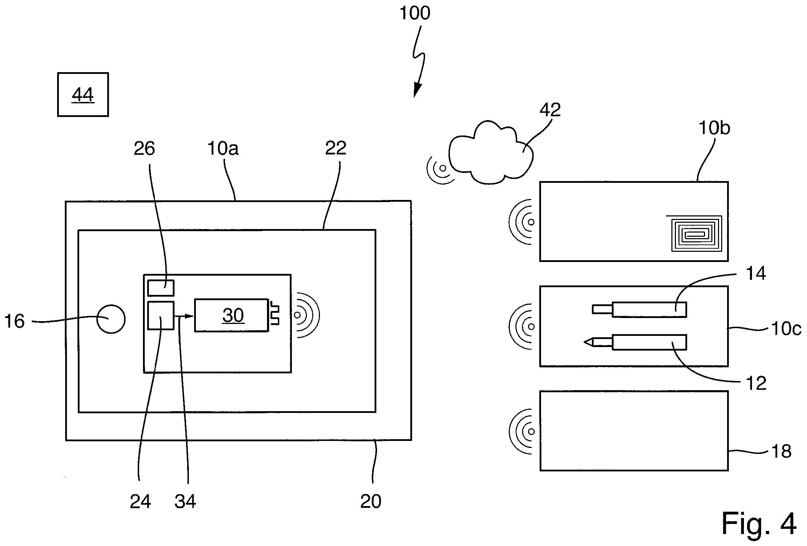

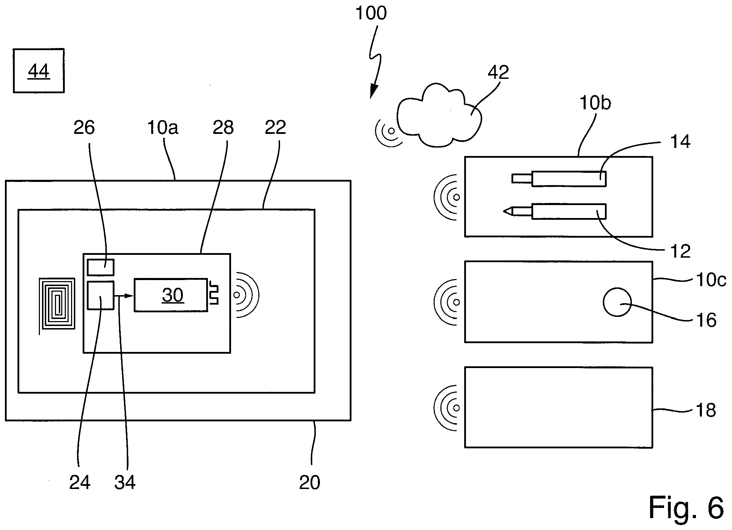

Darüber hinaus entsprechen auch die in den Figuren 4 und 6 gezeigten Lötsysteme 100 im Wesentlichen dem in Figur 2 gezeigten Lötsystem 100. Als einziger Unterschied ist bei dem in Figur 4 gezeigten Lötsystem 100 die erste Lötvorrichtung 10a eine Lötrauchabsaugvorrichtung, die zweite Lötvorrichtung 10b eine Heizplatte und die dritte Lötvorrichtung 10c eine Lötstation. Bei dem in Figur 6 gezeigten Lötsystem 100 ist die erste Lötvorrichtung 10a eine Heizplatte, die zweite Lötvorrichtung 10b eine Lötstation und die dritte Lötvorrichtung 10c eine Lötrauchabsaugvorrichtung.

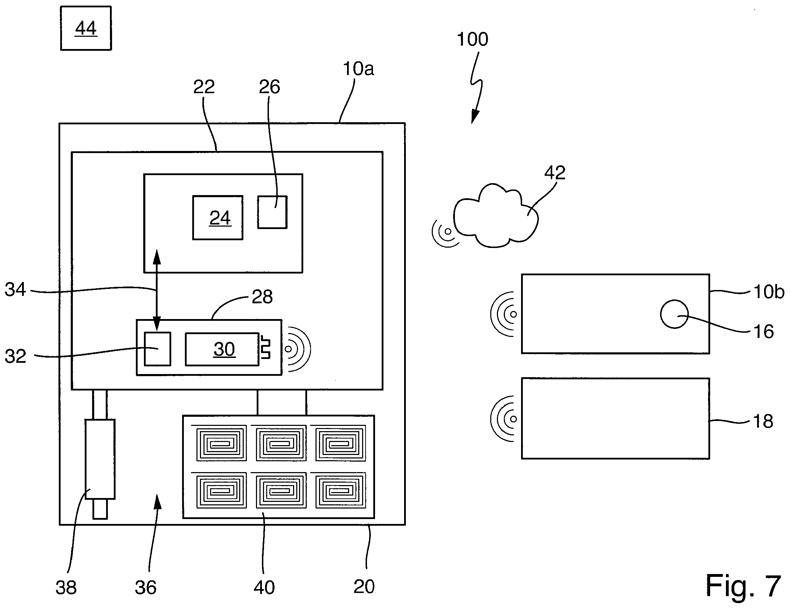

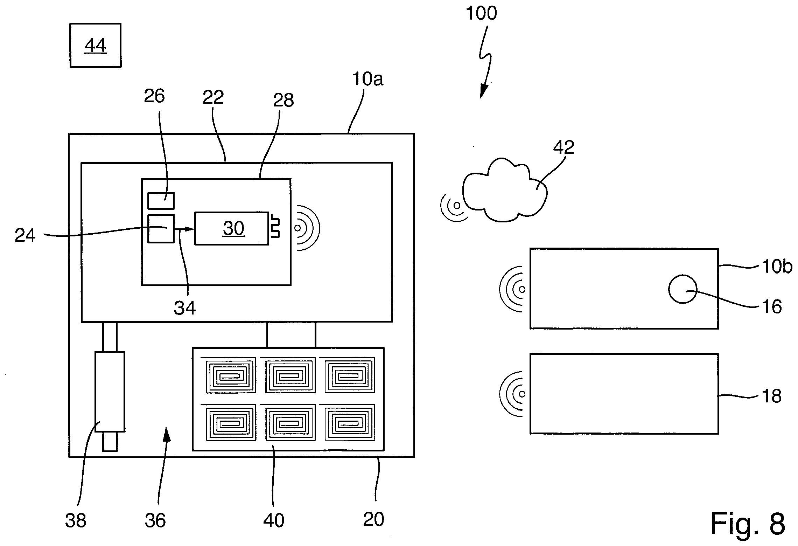

In Figur 7 und 8 ist die erste Lötvorrichtung 10a des Lötsystems 100 jeweils als sogenanntes Reworksystem ausgebildet, welches bspw. im Rahmen der Prototypenfertigung und Elektronikreparatur verwendet wird. Die zweite Lötvorrichtung 10b ist wiederum als Lötrauchabsaugvorrichtung ausgebildet. Im Übrigen entsprechen die Steuereinrichtungen 22 der in den Figuren 7 und 8 gezeigten Lötvorrichtungen 10a, den Steuereinrichtungen 22 der in den Figuren 1 und 2 gezeigten Lötvorrichtungen 10a.

Die als Reworksystem ausgebildeten Lötvorrichtungen 10a weisen mehrere motorisch oder manuell angetriebene Achsen auf (in den Figuren nicht gezeigt). Darüber hinaus weisen die Reworksysteme 10a jeweils eine oberhalb eines Arbeitsraums 36 angeordnete Heizeinrichtung 38 und eine unterhalb des Arbeitsraums 36 angeordnete Heizeinrichtung 40 zum Beheizen des Arbeitsraum 36 auf. Darüber hinaus können an den Achsen angeordnete Greifeinrichtungen, sowie Kameras und Sensoren, wie bspw. Temperatursensoren, zur Prozessüberwachung vorgesehen sein.

Die Funktionsweise der in den Figuren 1 bis 8 gezeigten Lötsysteme 100 ist jeweils vergleichbar und wird daher für sämtliche dort gezeigten Lötsysteme 100 gemeinsam erläutert.

Die erste Lötvorrichtung 10a ist jeweils zum Aufbau einer drahtlosen Datenverbindung mit der zweiten Lötvorrichtung 10b und/oder der dritten Lötvorrichtung 10c und/oder dem elektronischen Gerät 18 ausgebildet. Dabei ist es bspw. auch denkbar, dass die drahtlose Datenverbindung mit einem Server 42, insbesondere in Form einer Cloud aufgebaut wird. Wenn der Server 42 an das Internet angeschlossen ist, ist es bspw. möglich, dass herstellerseitig eine Fernwartung und/oder Ferndiagnose an der Lötvorrichtung 10a durchgeführt werden kann.

Die erste Lötvorrichtung 10a ist jeweils zur drahtlosen Steuerung der zweiten Lötvorrichtung 10b und/oder der dritten Lötvorrichtung 10c ausgebildet. Darüber hinaus ist die erste Lötvorrichtung 10a zur drahtlosen oder auch drahtgebundenen Weitergabe oder zum drahtlosen oder auch drahtgebundenen Empfang von Daten an das elektronische Gerät 18 oder von dem elektronischen Gerät 18 ausgebildet. Dabei können bspw. Betriebs- und/oder Prozessparameter der ersten, zweiten und/oder dritten Lötvorrichtung 10a, 10b, 10c an einen Bediener auf einen Bildschirm eines Smartphones Tablets, Bildschirms und/oder einer Datenbrille ausgegeben werden. Es ist auch denkbar, dass durch drahtlosen Empfang von Daten, bspw. vom Server 42 oder vom elektronischen Gerät 18 ein Update der Lötvorrichtung 10a durchgeführt werden kann. Darüber hinaus kann eine dynamische Prozesskontrolle der oder mehrerer Lötvorrichtungen 10a ermöglicht werden. Es ist auch denkbar, dass ein Bediener durch ein in der Speichereinrichtung 26 der ersten Lötvorrichtung 10a abgespeichertes Lötprogramm zum Wechsel von Werkzeugen angeleitet wird (bspw. zum Wechseln einer Lötspitze). Somit kann mit den Lötsystemen 100 eine Art Rüstmanagement ermöglicht werden. Eine Datenbrille kann beispielsweise diese Instruktionen direkt in die Sicht des Nutzers einblenden. Eine Datenbrille, die dazu ausgebildet ist die Platine zu erkennen, kann die zu lötenden Stellen in der Sicht des Nutzers markieren und die dazu erforderlichen Bauteile mit deren physischen und elektrischen Größen anzeigen.

Es kann auch ein Scanner 44 vorgesehen sein, welcher zum Lesen eines optischen Codes ausgebildet ist und mit der Steuereinrichtung 22 der ersten Lötvorrichtung 10a verbunden ist. Dabei ist es denkbar, dass der Scanner 44 zum Lesen eines eindimensionalen Codes (1D-Code), wie bspw. eines Barcodes ausgebildet ist. Es ist jedoch auch möglich, dass der Scanner zum Lesen eines zweidimensionalen Codes (2D-Code), wie bspw. eines Datamatrix-Codes oder QR-Codes ausgebildet ist.

Ein derartiger optischer Code kann bspw. auf einer zu bearbeitenden Leiterplatte angebracht sein. Dabei ist es denkbar, dass die Steuereinrichtung 22 der ersten Lötvorrichtung 10a basierend auf dem vom Scanner 44 gelesenen Code Betriebs- und/oder Prozessparameter der ersten, zweiten und/oder dritten Lötvorrichtung 10a, 10b, 10c abspeichert. Somit kann bspw. eine bauteilspezifische Dokumentation der Betriebs- und Prozessparameter erfolgen, wobei beim Auftreten fehlerhafter Bauteile (bspw. kalte Lötstellen) die bei der Bearbeitung des jeweiligen fehlerhaften Bauteils abgespeicherten Betriebs- und Prozessparameter überprüft werden können. Bei systematisch falschen Betriebs- und Prozessparametern können somit ganze Bauteilchargen nachträglich identifiziert und auf Fehler überprüft werden kann.

Es ist auch möglich, dass die Steuereinrichtung 22 der ersten Lötvorrichtung 10a ein Lötprofil, Lötparameter und/oder ein Lötprogramm, welches in der Speichereinrichtung 26 der ersten Lötvorrichtung 10a abgespeichert ist, basierend auf einem mittels des Scanners 44 eingelesenen Codes auswählt und an einem Display einer der Lötvorrichtungen 10a, 10b, 10c und/oder an einem Display des elektronischen Geräts 18 anzeigt.

Aufgrund der drahtlosen Datenverbindung ist es auch möglich dass die Steuereinrichtung 22 der ersten Lötvorrichtung 10a wenigstens einen Betriebsparameter der zweiten und/oder dritten Lötvorrichtung 10b, 10c drahtlos steuert. Somit ist es bspw. denkbar, dass die Steuereinrichtung 22 einer Lötstation 10a eine Drehzahl eines ein Lüfterrad einer Lötrauchabsaugvorrichtung 10c antreibenden Elektromotors 16 steuert (vgl. Figuren 1 und 2). Dabei ist denkbar, dass die Steuerung des Betriebsparameters der zweiten und/oder dritten Lötvorrichtung 10b, 10c abhängig von einem Betriebsparameter der ersten Lötvorrichtung 10a erfolgt. Somit kann bspw. die Drehzahl des Elektromotors 20, welcher das Lüfterrad antreibt, abhängig von der an der Lötstation eingestellten Löttemperatur einer Lötspitze gesteuert werden. Es ist jedoch auch möglich, dass die Steuerung des Betriebsparameters der zweiten und/oder dritten Lötvorrichtung 10b, 10c abhängig von einem gemessenen Prozessparameter der ersten Lötvorrichtung 10a erfolgt. Somit kann bspw. die Drehzahl des Elektromotors 20, welcher das Lüfterrad antreibt, abhängig von der an einer Lötspitze eines Lötkolbens gemessenen Temperatur gesteuert werden. Es ist auch denkbar, dass ein das Lüfterrad antreibender Elektromotor 20 abhängig vom aktuellen Betriebszustand der Lötstation 10a ein- oder ausgeschaltet wird.

Bei Lötsystemen 100, welche mehrere Lötvorrichtungen 10a, 10b, 10c umfassen kann somit eine hochflexible Kommunikation der Lötvorrichtungen 10a, 10b, 10c auf einfache Art und Weise ermöglicht werden kann.

Insgesamt kann folglich eine Lötvorrichtung 10 und ein Lötsystem 100 bereitgestellt werden, welche eine Integration und Vernetzung der Lötvorrichtung 10 bzw. des Lötsystems 100 in eine moderne Fabrik der Industrie 4.0 ermöglichen.

## Patentansprüche

1. Lötsystem (100) umfassend
- eine erste Lötvorrichtung (10a) mit einer Steuereinrichtung (22), die einen zentralen Mikrocontroller und/oder Mikroprozessor (24) umfasst und zur Steuerung wenigstens eines Betriebsparameters dieser ersten Lötvorrichtung (10) ausgebildet ist, wobei ein Funkmodul (28) vorgesehen ist, welches ein Kommunikationsmodul (30) umfasst, das zum Aufbau einer drahtlosen Datenverbindung ausgebildet ist, und
- wenigstens ein elektronisches Gerät (18), das ein Ausgabegerät zur visuellen Ausgabe von Informationen umfasst,
wobei die erste Lötvorrichtung (10a) zum Aufbau einer drahtlosen Datenverbindung mit dem elektronischen Gerät (18) ausgebildet ist und zur drahtlosen Weitergabe oder zum drahtlosen Empfang von Daten von dem elektronischen Gerät (18) ausgebildet ist,
**dadurch gekennzeichnet, dass** das Lötsystem umfasst
- wenigstens eine zweite Lötvorrichtung (10b) mit einer Steuereinrichtung (22), die einen zentralen Mikrocontroller und/oder Mikroprozessor (24) umfasst und zur Steuerung wenigstens eines Betriebsparameters dieser zweiten Lötvorrichtung (10) ausgebildet ist, wobei ein Funkmodul (28) vorgesehen ist, welches ein Kommunikationsmodul (30) umfasst, das zum Aufbau einer drahtlosen Datenverbindung ausgebildet ist, und
- wobei die erste Lötvorrichtung (10a) zum Aufbau einer drahtlosen Datenverbindung mit der zweiten Lötvorrichtung (10b) zur drahtlosen Steuerung der wenigstens einen zweiten Lötvorrichtung (10b) ausgebildet ist.

2. Lötsystem (100) nach Anspruch 1, wobei das jeweilige Funkmodul (28) den jeweiligen zentralen Mikrocontroller und/oder Mikroprozessor (24) umfasst.

3. Lötsystem (100) nach Anspruch 1, wobei das jeweilige Funkmodul (28) einen zusätzlichen Mikrocontroller und/oder Mikroprozessor (32) umfasst, der jeweiligen vom zentralen Mikrocontroller und/oder Mikroprozessor (24) verschieden ist.

4. Lötsystem (100) nach einem der vorherigen Ansprüche, wobei eine Datenleitung (34), insbesondere eine BUS-Datenleitung, vorgesehen ist, welche derart ausgebildet ist, dass sie den jeweiligen zentralen Mikrocontroller und/oder Mikroprozessor (24) mit dem jeweiligen Kommunikationsmodul (30) verbindet.

5. Lötsystem (100) nach Anspruch 3 und 4, wobei die Datenleitung (34) derart ausgebildet ist, dass sie den jeweiligen zentralen Mikrocontroller und/oder Mikroprozessor (24) mit dem jeweiligen Kommunikationsmodul (30) mittelbar über den zusätzlichen Mikrocontroller und/oder Mikroprozessor (32) verbindet.

6. Lötsystem (100) nach einem der vorherigen Ansprüche, wobei die Lötvorrichtung (10) jeweils ein Gehäuse (20) umfassen und das jeweilige Funkmodul (30) im jeweiligen Gehäuse (20) angeordnet ist.

7. Lötsystem (100) nach Anspruch 4 oder 5, wobei die Lötvorrichtung ein Gehäuse (20) umfasst, an dem jeweils eine Buchse der Datenleitung (34) angeordnet ist, wobei das jeweilige Funkmodul (28) außerhalb des Gehäuses (20) angeordnet ist und einen Stecker der Datenleitung (34) umfasst.

8. Lötsystem (100) nach einem der vorherigen Ansprüche, wobei die jeweilige Steuereinrichtung (22) eine Speichereinrichtung (26) umfasst, die zum Speichern von Lötprogrammen und/oder Lötparametern ausgebildet ist.

9. Lötsystem (100) nach einem der vorhergehenden Ansprüche, wobei das elektronische Gerät (18) eine Datenbrille ist, die die ausgebenden Informationen direkt in die Sicht eines Nutzers einblendet.

10. Lötsystem (100) nach einem der vorhergehenden Ansprüche, wobei ein Scanner (44) vorgesehen ist, welcher zum Lesen eines optischen Codes ausgebildet ist und mit der Steuereinrichtung (22) der ersten Lötvorrichtung (10a) verbunden ist.

11. Verfahren zum Betreiben eines Lötsystems (100) nach einem der Ansprüche 1 bis 10, wobei die Steuereinrichtung (22) der ersten Lötvorrichtung (10a) wenigstens einen Betriebsparameter der zweiten Lötvorrichtung (10b) drahtlos steuert.

12. Verfahren nach Anspruch 11, wobei die Steuerung des Betriebsparameters der zweiten Lötvorrichtung (10b) abhängig von einem Betriebsparameter der ersten Lötvorrichtung (10a) erfolgt.

13. Verfahren nach Anspruch 11 oder 12, wobei die Steuerung des Betriebsparameters der zweiten Lötvorrichtung (10b) abhängig von einem gemessenen Prozessparameter der ersten Lötvorrichtung (10a) erfolgt.

## Claims

1. Soldering system (100) comprising
- a first soldering device (10a) with a control unit (22) comprising a central micro-controller and/or micro-processor (24) designed to control at least one operating parameter of the first soldering device (10), whereby a wireless module (28) is provided comprising a communication module (30) designed to form a wireless data connection, and
- at least one electronic device (18) comprising an output device for the visual output of information, whereby the first soldering device (10a) is designed to form a wireless data connection with the electronic device (18) and is also designed for wireless forwarding or wireless receiving of data from the electronic device (18),
**characterised in that** the soldering system comprises
- at least one second soldering device (10b) with a control unit (22) comprising a central micro-controller and/or micro-processor (24) designed to control at least one operating parameter of the second soldering device (10), whereby a wireless module (28) is provided comprising a communication module (30) designed to form a wireless data connection, and
- whereby the first soldering device (10a) is designed to form a wireless data connection with the second soldering device (10b) for wireless control of the at least one second soldering device (10b).

2. Soldering system (100) as per claim 1, whereby the respective wireless module (28) comprises the respective central micro-controller and/or micro-processor (24).

3. Soldering system (100) as per claim 1, whereby the respective wireless module (28) comprises an additional micro-controller and/or micro-processor (32) different from the respective central micro-controller and/or micro-processor (24).

4. Soldering system (100) as per one of the preceding claims, whereby a data line (34), in particular a BUS data line, is provided and designed such that it connects the respective central micro-controller and/or micro-processor (24) with the respective communication module (30) .

5. Soldering system (100) as per claims 3 and 4, whereby the data line (34) is designed such that it indirectly connects the respective central micro-controller and/or micro-processor (24) with the respective communication module (30) via the additional micro-controller and/or micro-processor (32).

6. Soldering system (100) as per one of the preceding claims, whereby the respective soldering device (10) comprises a housing (20) and the respective wireless module (28) is contained within the respective housing (20) .

7. Soldering system (100) as per claim 4 or 5, whereby the soldering device comprises a housing (20) on which a socket of the data line (34) is positioned, whereby the respective wireless module (28) is positioned outside of the housing (20) and comprises a plug of the data line (34) .

8. Soldering system (100) as per one of the preceding claims, whereby the respective control unit (22) comprises a storage unit (26) designed to store soldering programs and/or soldering parameters.

9. Soldering system (100) as per one of the preceding claims, whereby the electronic device (18) is a pair of data goggles that displays the information output directly in the user's line of vision.

10. Soldering system (100) as per one of the preceding claims, whereby a scanner (44) is provided for reading a visual code and is connected to the control unit (22) of the first soldering device (10a).

11. Process for operating a soldering system (100) as per one of the claims 1 through 10, whereby the control unit (22) of the first soldering device (10a) wirelessly controls at least one operating parameter of the second soldering device (10b).

12. Process as per claim 11, whereby the control of the operating parameter of the second soldering device (10b) depends on an operating parameter of the first soldering device (10a).

13. Process as per claim 11 or 12, whereby the control of the operating parameter of the second soldering device (10b) depends on a measured process parameter of the first soldering device (10a).

## Revendications

1. Système de soudage (100) comprenant
- un premier dispositif de soudage (10a) avec un équipement de commande (22), qui comprend un microcontrôleur et/ou microprocesseur central (24) et EST réalisé pour la commande d'au moins un paramètre de fonctionnement de ce premier dispositif de soudage (10), dans lequel un module radio (28) est prévu, lequel comprend un module de communication (30), qui est réalisé pour l'établissement d'une liaison de données sans fil, et
- au moins un appareil électronique (18), qui comprend un appareil de sortie pour la sortie visuelle d'informations,
dans lequel le premier dispositif de soudage (10a) est réalisé pour l'établissement d'une liaison de données sans fil avec l'appareil électronique (18) et pour la transmission sans fil ou pour la réception sans fil de données à partir de l'appareil électronique (18),
**caractérisé en ce que** le système de soudage comprend
- au moins un deuxième dispositif de soudage (10b) avec un équipement de commande (22), qui comprend un microcontrôleur et/ou microprocesseur central (24) et est réalisé pour la commande d'au moins un paramètre de fonctionnement de ce deuxième dispositif de soudage (10), dans lequel un module radio (28) est prévu, lequel comprend un module de communication (30), qui est réalisé pour l'établissement d'une liaison de données sans fil, et
- dans lequel le premier dispositif de soudage (10a) est réalisé pour l'établissement d'une liaison de données sans fil avec le deuxième dispositif de soudage (10b) pour la commande sans fil du au moins un deuxième dispositif de soudage (10b).

2. Système de soudage (100) selon la revendication 1, dans lequel le module radio (28) respectif comprend le microcontrôleur et/ou microprocesseur central (24) respectif.

3. Système de soudage (100) selon la revendication 1, dans lequel le module radio (28) respectif comprend un microcontrôleur et/ou microprocesseur additionnel (32), qui est différent respectif du microcontrôleur et/ou microprocesseur central (24).

4. Système de soudage (100) selon l'une quelconque des revendications précédentes, dans lequel une liaison de données (34), en particulier une liaison de données de BUS, est prévue, laquelle est réalisée de telle sorte qu'elle relie le microcontrôleur et/ou microprocesseur central (24) respectif au module de communication (30) respectif.

5. Système de soudage (100) selon la revendication 3 et 4, dans lequel la ligne de données (34) est réalisée de telle sorte qu'elle relie le microcontrôleur et/ou microprocesseur central (24) respectif au module de communication (30) respectif indirectement par l'intermédiaire du microcontrôleur et/ou microprocesseur additionnel (32).

6. Système de soudage (100) selon l'une quelconque des revendications précédentes, dans lequel le dispositif de soudage (10) comprennent respectivement un boîtier (20) et le module radio (28) respectif est disposé dans le boîtier (20) respectif.

7. Système de soudage (100) selon la revendication 4 ou 5, dans lequel le dispositif de soudage comprend un boîtier (20), sur lequel est disposée respectivement une douille de la ligne de données (34), dans lequel le module radio (28) respectif est disposé à l'extérieur du boîtier (20) et comprend un connecteur de la ligne de données (34).

8. Système de soudage (100) selon l'une quelconque des revendications précédentes, dans lequel l'équipement de commande (22) respectif comprend un équipement de mémoire (26), qui est réalisé pour la mise en mémoire de programmes de soudage et/ou paramètres de soudage.

9. Système de soudage (100) selon l'une quelconque des revendications précédentes, dans lequel l'appareil électronique (18) est des lunettes intelligentes, qui affiche les informations sortantes directement à la vue d'un utilisateur.

10. Système de soudage (100) selon l'une quelconque des revendications précédentes, dans lequel un scanner (44) est prévu, lequel est réalisé pour la lecture d'un code optique et est relié à l'équipement de commande (22) du premier dispositif de soudage (10a).

11. Procédé pour le fonctionnement d'un système de soudage (100) selon l'une quelconque des revendications 1 à 10, dans lequel l'équipement de commande (22) du premier dispositif de soudage (10a) commande sans fil au moins un paramètre de fonctionnement du deuxième dispositif de soudage (10b).

12. Procédé selon la revendication 11, dans lequel la commande du paramètre de fonctionnement du deuxième dispositif de soudage (10b) s'effectue en fonction d'un paramètre de fonctionnement du premier dispositif de soudage (10a).

13. Procédé selon la revendication 11 ou 12, dans lequel la commande du paramètre de fonctionnement du deuxième dispositif de soudage (10b) s'effectue en fonction d'un paramètre de processus mesuré du premier dispositif de soudage (10a).
